Europäisches Patentamt

European Patent Office

Office européen des brevets

(19)

(11) Veröffentlichungsnummer: **0 433 473 A1**

## EUROPÄISCHE PATENTANMELDUNG

(12)

(21) Anmeldenummer: 89123402.3

(22) Anmeldetag: 18.12.89

(51) Int. Cl.⁵: **C07F 7/22**

(43) Veröffentlichungstag der Anmeldung:
26.06.91 Patentblatt 91/26

(84) Benannte Vertragsstaaten:
AT BE CH DE ES FR GB GR IT LI LU NL SE

(71) Anmelder: **Chemische Werke München Otto Bärlocher GmbH**
**Riesstrasse 16**
**W-8000 München 50(DE)**

(72) Erfinder: **Malguzzi, Romualdo, Dr.**
**Via Marescalca 17**
**I-20075 Lodi(IT)**
Erfinder: **Sandri, Maurizio, Dr.**
**Via Fratelli de Dio, No. 2**
**I-20094 Boccinasco Mailand(IT)**
Erfinder: **Rosenthal, Michael, Dr.**
**Zentnerstrasse 20**
**W-8000 München 40(DE)**
Erfinder: **Pürzer, Albert W., Dr.**
**Agricolastrasse 69**
**W-8000 München 21(DE)**

(74) Vertreter: **Patentanwälte Grünecker, Kinkeldey, Stockmair & Partner**
**Maximilianstrasse 58**
**W-8000 München 22(DE)**

(54) **Verfahren für die Direktsynthese von Organozinnverbindungen und deren Verwendung.**

(57) Die Erfindung betrifft ein Verfahren für die Direktsynthese von Organozinnverbindungen der Formel

$$R_nSnCl_{4-n}$$

wobei n = 1 - 4
und R = lineares oder verzweigtes oder cycloaliphatisches Alkyl mit 4 - 18 C-Atomen,
durch Umsetzung von metallischem Zinn mit Alkylchloriden, dadurch gekennzeichnet, daß man die Umsetzung in Gegenwart von Aminen der allgemeinen

Formel A) $\quad R^1_aN\,[(CH_2CH_2O)_mCH_2CH_2OR^2]_{3-a}$
und/oder Ammoniumchloriden der Formel

b) $\quad R^1_bN\,[(CH_2CH_2O)_mCH_2CH_2OR^2]_{4-b}\,Cl$
durchführt,
wobei
a = 0, 1 oder 2;
b = 0, 1, 2 oder 3;

$R^1$ = lineares oder verzweigtes oder cycloaliphatisches Alkyl mit 2 bis 24 C-Atomen, Aryl, Alkylaryl oder substituiertes Aryl und, falls a = 2 bzw. b = 2 oder 3, die $R^1$-Gruppen gleich oder verschieden sein können;
$R^2$ = H, lineares oder verzweigtes Alkyl mit 1 bis 20 C-Atomen, Aryl, substituiertes Aryl oder Alkylaryl; und
m = 1 - 20.

## VERFAHREN FÜR DIE DIREKTSYNTHESE VON ORGANOZINNVERBINDUNGEN UND DEREN VERWENDUNG

Die vorliegende Erfindung betrifft ein Verfahren für die Direktsynthese von Organozinnverbindungen der allgemeinen Formel

$$R_nSnCl_{4-n} \quad (1)$$

wobei n = 1 - 4
und R = lineares oder verzweigtes oder cycloaliphatisches Alkyl mit 4 - 18 C-Atomen einschließlich von Gemischen derartiger Verbindungen sowie deren Verwendung.

Die Synthese von Organozinnverbindungen, insbesondere Organozinnchloriden der oben genannten Formel (1) erfolgt industriell üblicherweise nach überwiegend folgenden Methoden:
- Umsetzung von Zinntetrachlorid mit Aluminiumalkylen
- Grignard-Synthese

Bei der Direktsynthese aus Zinnmetall gemäß der nachstehend angegebenen Reaktionsgleichung (2) liegt das Gleichgewicht auf der linken Seite und es können ohne geeignete Katalysatoren keine nennenswerten Ausbeuten an erwünschten Verbindungen erzielt werden.

$$Sn + 2 R'Cl \rightleftarrows R'_2SnCl_2 \quad (R' = Alkyl) \quad (2)$$

Die Alkylzinnchloride geben mit Alkylchloriden und/oder Zinnmetall folgende Nebenreaktionen:

$$\text{(a)} \quad R'_2SnCl_2 + Sn + R'CL \rightarrow R'_3SnCl + SnCl_2$$
$$\text{(b)} \quad R'_2SnCl_2 + Sn + 2 R'Cl \rightarrow R'_4Sn + 2SnCl_2$$
$$\text{(c)} \quad 4R'_3SnCl + Sn \rightarrow 3R'_4Sn + 2SnCl_2$$

Darüber hinaus sind auch Auto-Komproportionierungsreaktionen möglich:

$$R'_3SnCl + R'SnCl_3 \rightarrow 2R'_2SnCl_2 \quad (3)$$

sowie auch die Bildung von Nebenprodukten, insbesondere aus $SnCl_2$:

$$SnCl_2 + R'Cl \rightarrow R'SnCl_3 \quad (4)$$

Bei der oben beschriebenen Synthese können somit folgende Verbindungen:

$R'_4Sn, R'_3SnCl, R'SnCl_2, R'SnCl_3$ und $SnCl_2$

in dem Reaktionsgemisch vorhanden sein.

In jedem Falle haben alle diese Verbindungen industriell nutzbare Bedeutung, da sie durch bekannte Reaktionen zu gewünschten Endprodukten umgewandelt werden können:

$$R'_4Sn + SnCl_4 \rightarrow 2R'_2SnCl_2$$
$$R'_3SnCl + SnCl_4 \rightarrow R'SnCl_3 + R'_2SnCl_2$$
$$SnCl_2 + R'Cl \rightarrow R'SnCl_3$$

Wenn eine oder mehrere der vorstehend angegebenen Nebenreaktionen zusammen mit der Hauptreaktion stattfinden oder diese überlagern, entstehen variable Mengen von Zinnhalogenid $(SnCl_2)$, das wiederum für sich gewonnen oder für weitere Reaktionen verwendet werden kann.

Verfahren der direkten Synthese von Organozinnhalogeniden sind bereits in zahlreichen Patenten beschrieben, insbesondere unter Verwendung von Alkylbromiden und -jodiden als Ausgangshalogenide.

Es ist bekannt, bspw. aus US-PS 3 857 868, daß die Reaktion der direkten Synthese durch das Vorhandensein von tertiären Aminen und/oder quarternären Ammoniumsalzen gefördert wird, wobei letztere "in situ" aus dem verwendeten tertiären Amin und dem eingesetzten Alkylhalogenid gebildet werden können.

Die Reaktion wird weiterhin gefördert durch das Vorhandensein von polaren Lösungsmitteln und/oder Katalysatoren, welche mit dem Zinn reagieren können. Zu diesem Zweck werden zuweilen Alkohole, Ester, oder Amide verwendet. Bei der Direktsynthese von Alkylzinnhalogeniden haben Alkylchloride gegenüber metallischem Zinn im Vergleich zu den entsprechenden Alkylbromiden und -jodiden eine geringe Reaktivität. Weiterhin nimmt innerhalb der Alkylchloride die Reaktionsgeschwindigkeit und die Ausbeute an erwünschtem Reaktionsprodukt mit zunehmender Anzahl der C-Atome in der Alkylkette ab, wobei bereits bei Verwendung von $C_4$-Alkylchlorid (Butylchlorid) die Direktsynthese schwierig durchzuführen ist. Die Alkylzinnchloride werden daher industriell aus Zinntetrachlorid durch Umsetzung mit Trialkylaluminiumverbindungen, Grignard-Synthese oder modifizierte Wurtz-Synthese hergestellt, was einen beträchtlichen Mehraufwand an Kosten und Verfahrensschritten erfordert.

Der vorliegenden Erfindung liegt die Aufgabe zugrunde, eine Verfahren für die Direktsynthese von Organozinnverbindungen unter Verwendung von Alkylchloriden mit vier oder mehr C-Atomen zur Verfügung zu stellen, das sich in einfacher Weise und mit guter Ausbeute durchführen läßt.

Diese Aufgabe wird erfindungsgemäß gelöst durch ein Verfahren der eingangs genannten Art, das dadurch gekennzeichnet ist, daß man die Umsetzung in Gegenwart von Aminen der allgemeinen Formel

A)    $R^1_aN[(CH_2CH_2O)_mCH_2CH_2OR^2]_{3-a}$

und/oder Ammoniumchloriden der Formel

B)    $R^1_bN[(CH_2CH_2O)_mCH_2CH_2OR^2]_{4-b}$ Cl

durchführt,

wobei

a = 0,1 oder 2;

b = 0, 1, 2 oder 3;

$R^1$ = lineares oder verzweigte oder cycloalophatisches Alkyl mit 2 bis 24 C-Atomen, Aryl, Alkylaryl oder substituiertes Aryl und, falls a = 2 bzw. b = 2 oder 3, die $R^1$-Gruppen gleich oder verschieden sein können;

$R^2$ = H, lineares oder verzweigtes Alkyl mit 1 bis 20 C-Atomen, Aryl, substituiertes Aryl oder Alkylaryl; und

m = 1 - 20.

Die vorliegende Erfindung betrifft speziell die Direktsynthese von Organozinnverbindungen, ausgehend von Alyklchoriden, welche wegen ihrer geringeren Reaktivität bisher schwieriger verwendbar waren als die entsprechenden Bromide und Jodide, und bietet darüber hinaus den Vorteil der Verwendung von preisgünstigeren Ausgangsstoffen, namentlich Alkylchoriden, ohne daß unter Druck gearbeitet werden müßte, wie dies bei Alkylhalogeniden mit weniger als 4 C-Atomen im Alkylteil aufgrund deren niedriger Siedepunkte in der Regel erforderlich ist.

Gemäß der Erfindung hat sich überraschenderweise gezeigt, daß die Direktsynthese von Organozinnverbindungen durch Umsetzung von metallischem Zinn mit Alkylchloriden sehr wirksam und effizient durchgeführt werden kann, wenn die Umsetzung in Gegenwart von Aminen der oben angegebenen Formel A oder Ammoniumchloriden der oben angegebenen Formel B ausgeführt wird. Im Falle der Verwendung der Amine der Formel A werden hierbei in situ quaternäre Ammoniumsalze gebildet.

Die Umsetzung erfolgt geeigneterweise bei einer Temperatur zwischen 20 und 200° C , vorzugsweise zwischen 140 und 190° C in Gegenwart von 0,1 bis 4 Mol des Amins der Formel A und/oder des Ammoniumchlorids der Formel B B pro Grammatom Zinn. Die Umsetzungszeit beträgt geeigneterweise 3 bis 24 Stunden, vorzugsweise 6 bis 10 Stunden. Ferner erfolgt die Umsetzung geeigneterweise mit 1 bis 6 Mol, vorzugsweise 2 bis 3 Mol Alkylchlorid pro Grammatom Zinn.

Obwohl nicht erforderlich, ist häufig die Gegenwart von Spuren von $J_2$ oder $Br_2$, insbesondere in Mengen zwischen $10^{-3}$ und 0,2, vorzugsweise $10^{-2}$ Mol $J_2$ oder $Br_2$ pro Grammatom Zinn, für die Umsetzung vorteilhaft. Das $J_2$ und/oder $Br_2$ kann der Umsetzung direkt zugeführt oder gelöst und zusammen mit dem Alkylchlorid zugesetzt werden.

Das Amin und/oder Ammoniumchlorid kann nach vervollständigter Umsetzung anschließend durch bekannte chemische Verfahren zurückgewonnen und wieder eingesetzt werden.

Für ein gutes Gelingen der Umsetzung ist es wichtig, wenn auch nicht unbedingt erforderlich, daß das Alkylchlorid nicht in einer so hohen Konzentration vorliegt, daß es als Lösungsmittel wirksam wird. Daher wird das Alkylchlorid vorzugsweise der Umsetzung langsam tropfenweise bei der gewählten Reaktionstemperatur so zugesetzt, daß die gewählte Reaktionstemperatur beibehalten bleibt. Die Umsetzung kann in Gegenwart geeigneter Lösungsmittel durchgeführt werden, um die Reaktionsmischung ausreichend dünnflüssig zu halten.

Nach der Umsetzung wird die Reaktionsmischung üblicherweise filtriert, um nicht reagiertes Zinn abzutrennen. Dieses kann dann mit Aceton gewaschen und getrocknet und erneut verwendet werden.

Das Filtrat kann zur Rückgewinnung des nicht umgesetzten Alkylchlorids und/oder des gegebenenfalls verwendeten Lösungsmittels unter verringertem Druck destilliert werden.

Bei der Verwendung des Amins und/oder des Ammoniumchlorids in einer zu dem Zinn äquimolaren Menge bilden sich Gemische aus Dialkylzinndichlorid, Trialkylzinnchlorid und Tetraalkylzinn sowie Zinndichlorid. Bei Verwendung des Amins und/oder des Ammoniumchlorids im Überschuß zur äquimolaren Menge wird als Reaktionsprodukt überwiegend Trialkylzinnchlorid und in variablem Ausmaß zusätzlich Tetraalkylzinn und Zinndichlorid erhalten. Bei Verwendung des Amins und/oder des Ammoniumchlorids in katalytischen Mengen von weniger als 0,5 Mol, insbesondere 0,1 bis 0,33 Mol pro Grammatom Zinn wird als Reaktionsprodukt nahezu reines Dialkylzinndichlorid und in kleinen variablen Mengen Alkylzinntrichlorid erhalten.

Die erfindungsgemäß hergestellten Organozinnverbindungen eignen sich insbesondere als Zwischenprodukte zur Herstellung von Thermostabilisatoren, bzpw. Alkylzinnmercaptoverbindungen, für PVC-Harze.

Die nachfolgenden Beispiele erläutern die Erfindung.

Das Verhältnis der Umwandlung des eingesetzten metallischen Zinns ist in % angegeben, wobei alle Arten der Zinnverbindungen, in denen das Zinn nicht metallisch vorliegt, beispielsweise auch gegebenenfalls vorliegendes Zinndichlorid im Reaktionsprodukt als "nutzbares" Produkt gewertet werden.

Die Reaktionsprodukte wurden unter Anwendung der Dünnschichtchromatographie analysiert.

Beispiel 1

Zinnpulver (36g; 0,3 Mol) wird zusammen mit Octylchlorid (14,9 g, 0,1 Mol) und $J_2$(0,4 g; 1,57 x $10^{-3}$ Mol) in Amin der durchschnittlichen Zusammensetzung $C_{13}H_{27}N[(CH_2CH_2O)_{1,3}CH_2CH_2OH]_2$ - (120,3 g; 0,3 Mol) bei Raumtemperatur suspendiert.

Das Reaktionsgemisch wird unter gründlichem Rühren auf 170 bis 175° C erwärmt, und bei dieser Temperatur wird im Verlauf von 6 Stunden weiteres Octylchlorid (120,1 g; 0,81 Mol) zugesetzt, wobei während der gesamten Zuführdauer die genannte Temperatur aufrechterhalten wird. Nach dem Zusetzen der Gesamtmenge des Octylchlorids wird die Reaktion über weitere 3 Stunden unter Rühren bei 170 bis 175° C fortgeführt.

Nach Ablauf dieser Zeit läßt man auf 80 bis 90° C abkühlen und filtriert dann das nicht reagierte Zinn aus, welches dann auf dem Filter mit Aceton gewaschen, getrocknet und gewogen wird. Der umgewandelte Anteil des eingesetzten Zinns erweist sich als 84 %.

Die Analyse des Produkts durch Dünnschichtchromatographie (TLC) ergibt als Hauptbestandteile $R_3SnCl$ und $R_2SnCl_2$, wobei ersteres überwiegt, sowie Spuren von $RsnCl_3$ und $R_4Sn$.

Beispiel 2

Zinnpulver (60 g; 0,5 Mol) wird zusammen mit Octylchlorid (14,9 g; 0,1 Mol) und $J_2$ (0,635 g; 2,5 x $10^{-3}$ Mol) in Amin der durchschnittlichen Zusammensetzung $C_{13}H_{27}N[(CH_2CH_2O)_{1,3}CH_2CH_2OH]_2$ - (40,1 g; 0,2 Mol) suspendiert. Das Reaktionsgemisch wird auf 175° C erwärmt, und bei dieser Temperatur wird im Verlauf von 6 Stunden unter gründlichem Rühren weiteres Octylchlorid (148,5 g; 1,0 Mol) eingetragen.

Nach dem Eintrag wird die Reaktion 3 Stunden unter Rühren bei 175° C fortgeführt. Danach läßt man auf 80 bis 90°C abkühlen und filtriert das nicht reagierte Zinn aus, welches auf dem Filter mit Aceton gewaschen, getrocknet und gewogen wird.

Der umgewandelte Anteil des eingesetzten Zinns beträgt 65 %.

Die TLC-Analyse zeigt, daß das Produkt in der Hauptsache aus $R_2SnCl_2$ und $RSnCl_3$ besteht, mit Überwiegen der ersten Komponente. Vorhanden ist auch eine gewisse Menge $R_3SnCl$, Spuren von $R_4Sn$ sind nicht erkennbar.

Beispiel 3

Zinnpulver (36 g; 0,3 Mol) wird zusammen mit Octylchlorid (178,2 g; 1,2 Mol) und $J_2$ (0,76 g; 3 x $10^{-3}$ Mol) in Tris-(3,6-dioxaheptyl)amin (194 g; 0,6 Mol) suspendiert und unter gründlichem Rühren während 12 Stunden auf 175°C gehalten.

Am Ende der Reaktion läßt man auf 80 - 90° C abkühlen und filtriert das nicht reagierte Zinn aus, welches gewaschen, getrocknet und gewogen wird.

Der umgewandelte Anteil des eingesetzten Zinns beträgt 78 %. Die TLC-Analyse ergibt, daß das Produkt in der Hauptsache aus $R_3SnCl$ und $R_2SnCl$ besteht, mit starkem Überwiegen der ersten Komponente.

Beispiel 4

Zinnpulver (36 g; 0,3 Mol) wird zusammen mit Octylchlorid (14,9 g; 0,1 Mol) und $J_2$ (0,76 g; 3 x $10^{-3}$ Mol) in Diethylethoxyethanolamin (96,75 g; 0,4 Mol) suspendiert.

Das Reaktionsgemisch wird unter gründlichem Rühren auf 170 bis 175° C erwärmt. Bei dieser Temperatur wird im Verlauf von 4 Stunden weiteres Octylchlorid (74,2 g; 0,5 Mol) eingetragen. Nach dem Eintrag wird die Reaktion unter Rühren bei 175° C während weiteren 4 Stunden fortgeführt.

Nach Abkühlen auf 80 - 90° C wird das nicht reagierte Zinn abfiltriert, gewaschen, getrocknet und gewogen. Der umgewandelte Anteil des eingesetzten Zinns beträgt 66,6 %.

Die TLC-Analyse zeigt, daß das Produkt aus $R_3SnCl$, $R_4Sn$ und $R_2SnCl_2$ besteht, mit Überwiegen der ersten Komponente.

Beispiel 5

Zinnpulver (24 g; 0,2 Mol) wird zusammen mit Octylchlorid (118,8 g; 0,8 Mol) und $J_2$ (0,51 g; 2 x $10^{-3}$ Mol) in Amin der durchschnittlichen Zusammensetzung $C_{18}H_{37}N[(CH_2CH_2O)_{3,5}CH_2CH_2OH]_2$ - (66,3 g; 0,1 Mol) suspendiert.

Das Reaktionsgemisch wird unter gründlichem Rühren während 12 Stunden auf 160° C gehalten. Nach Abkühlen wird das nicht reagierte Zinn abfiltriert, gewaschen, getrocknet und gewogen.

Der umgewandelte Anteil des eingesetzten Zinns beträgt 81,8 % und das Produkt besteht in der Hauptsache aus $R_3SnCl$, zusammen mit $R_2SnCl_2$.

Beispiel 6

Zinnpulver (36 g; 0,3 Mol) wird zusammen mit $J_2$ (0,76 g; 3 x $10^{-3}$ Mol) in Amin der durchschnittlichen Zusammensetzung $C_{13}H_{27}N[(CH_2CH_2O)_{1,3}CH_2CH_2OH]_2$ suspendiert. Dem auf 170 - 175° C erwärmten Reaktionsgemisch wird im Verlauf von 8 Stunden mittels einer unter die Oberfläche des Reaktionsgemischs reichenden Sonde Butylchlorid (83,3 g; 0,9 Mol) tropfenweise derart zugesetzt, daß die Reaktionstemperatur erhalten bleibt.

Nach Ablauf dieser Zeit wird das Reaktionsgemisch bei 80° C filtriert. Das nicht reagierte Zinn wird auf dem Filter gewaschen, getrocknet und gewogen.

Der umgewandelte Anteil des eingesetzten Zinns beträgt 76,4 %.

Das Produkt besteht in der Hauptsache aus $R_3SnCl$.

Beispiel 7

Zinnpulver (36 g; 0,3 Mol) wird in Diethylethoxyethanolamin (24,3 g; 0,15 Mol) zusammen mit $J_2$ (0,76 g; 3 x $10^{-3}$ Mol) suspendiert. Butylchlorid (83,3 g; 0,9 Mol) wird im Verlauf von 7,5 Stunden unter Rühren in der gleichen Weise wie im Beispiel 6 erläutert tropfenweise zugesetzt. Nach der Zugabe wird das Reaktionsgemisch gekühlt und das nicht reagierte Zinn abfiltriert, gewaschen, getrocknet und gewogen.

Der umgewandelte Anteil des eingesetzten Zinns beträgt 64,5 %.

Das Produkt besteht in der Hauptsache aus $R_3SnCl$, zusammen mit $R_4Sn$ und $R_2SnCl_2$.

Beispiel 8

Zinnpulver (60 g; 0,5 Mol) wird in geschmolzenem Ammoniumsalz Diethyl-bis-(ethoxyethanol)-ammonium- chlorid (71,5 g; 0,25 Mol) suspendiert und vorgelegt. Unter Rühren wird auf 180° C aufgeheizt und es wird tropfenweise Octylchlorid (185,5 g; 1,25 Mol) über 5 Stunden zugegeben.

Nach dem Zusetzen der Gesamtmenge des Octylchlorids wird die Reaktion über weitere 7 Stunden unter Rühren bei 180 bis 185°C fortgeführt.

Nach Ablauf dieser Zeit läßt man auf 80 bis 90° C abkühlen und filtriert dann das nicht reagierte Zinn aus, welches dann auf dem Filter gewaschen, getrocknet und gewogen wird.

Der umgewandelte Anteil des eingesetzten Zinns erweist sich als 86,5 %.

Das Produkt besteht aus $R_3SnCl$ und $R_2SnCl_2$ mit geringem Überwiegen der ersten Komponente.

Beispiel 9

Amin der Formel $(C_4H_9)_2N$-$(CH_2CH_2OCH_2CH_2OCH_2CH_2OH)$ (28,8 g; 0,11 Mol) wird auf 130°C zusammen mit $J_2$ (0,63 g; $2,5 \times 10^{-3}$ Mol) erwärmt.

Bei dieser Temperatur wird Zinnpulver (40 g; 0,34 Mol) suspendiert und Dodecylchlorid (143,4 g; 0,7 Mol) tropfenweise im Verlauf von 7,5 Stunden zugesetzt, und die Temperatur wird bis auf 180 - 190° geführt.

Die Reaktion wird noch weitere 2,5 Stunden fortgeführt.

Nach Abkühlen auf 80 - 90°C wird das nicht reagierte Zinn abfiltriert, gewaschen, getrocknet und gewogen. Der umgewandelte Anteil des eingesetzten Zinns beträgt 90 %. Das Produkt besteht in der Hauptsache aus $R_2Sncl_2$ mit kleiner Menge an $R_3SnCl$.

**Ansprüche**

1. Verfahren für die Direktsynthese von Organozinnverbindungen der Formel

$R_nSnCl_{4-n}$

wobei n = 1 - 4

und R = lineares oder verzweigtes oder cycloaliphatisches Alkyl mit 4 - 18 C-Atomen,

durch Umsetzung von metallischem Zinn mit Alkylchloriden, **dadurch gekennzeichnet**, daß man die Umsetzung in Gegenwart von Aminen der allgemeinen Formel A)    $R^1_aN [(CH_2CH_2O)_mCH_2CH_2OR^2]_{3-a}$

und/oder Ammoniumchloriden der Formel

B)    $R^1_bN [(CH_2CH_2O)_mCH_2CH_2OR^2]_{4-b}^{Cl}$

durchführt,

wobei

a = 0, 1 oder 2;

b = 0, 1, 2 oder 3;

$R^1$ = lineares oder verzweigtes oder cycloaliphatisches Alkyl mit 2 bis 24 C-Atomen, Aryl, Alkylaryl oder substituiertes Aryl und, falls a = 2 bzw. b = 2 oder 3, die $R^1$-Gruppen gleich oder verschieden sein können;

$R^2$ = H, lineares oder verzweigtes Alkyl mit 1 bis 20 C-Atomen, Aryl, substituiertes Aryl oder Alkylaryl; und

m = 1 - 20.

2. Verfahren nach Anspruch 1, **dadurch gekennzeichnet**, daß $R^2$ = lineares oder verzweigtes Alkyl mit 1 bis 4 C-Atomen.

3. Verfahren nach Anspruch 1 oder 2, **dadurch gekennzeichnet**, daß m = 1 - 10, insbesondere 1-3.

4. Verfahren nach mindestens einem der Ansprüche 1 bis 3, **dadurch gekennzeichnet**, daß als Alkylchlorid Butylchlorid, Octylchlorid oder Dodecylchlorid eingesetzt wird.

5. Verfahren nach mindestens einem der Ansprüche 1 bis 4, **dadurch gekennzeichnet**, daß das Amin und/oder das Ammoniumchlorid in einem Verhältnis von 0,1 - 0,33 Mol je Grammatom Zinn eingesetzt wird.

6. Verfahren nach mindestens einem der Ansprüche 1 bis 4, **dadurch gekennzeichnet**, daß äquimolare Mengen an Amin und/oder Ammoniumchlorid in bezug auf das Zinn eingesetzt werden.

7. Verfahren nach mindestens einem der Ansprüche 1 bis 4, **dadurch gekennzeichnet**, daß das Amin und/oder Ammoniumchlorid im Überschuß zur äquimolaren Menge in bezug auf das Zinn eingesetzt werden.

8. Verwendung der nach dem Verfahren gemäß mindestens einem der Ansprüche 1 bis 7 hergestellten Organozinnverbindungen als Zwischenprodukte zur Herstellung von Thermostabilisatoren für Polyvinylchloridharze.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-3 857 868 (R.C. WITMAN et al.) <br> * Spalte 1, Zeile 30 – Spalte 2, Zeile 26; Tabelle I; Anspruch 1 * <br> --- | 1-8 | C 07 F 7/22 |
| A | US-A-4 128 565 (K. YAJIMA et al.) <br> * Spalte 2, Zeile 21 – Spalte 3, Zeile 15; Spalte 4, Zeilen 5-18; Beispiel 1; Anspruch 1 * <br> ----- | 1-8 | |
| | | | **RECHERCHIERTE SACHGEBIETE (Int. Cl.5)** <br><br> C 07 F 7/00 |

~~Der vorliegende Recherchenbericht wurde für alle Patentansprüche erstellt~~

| Recherchenort | Abschlußdatum der Recherche | Prüfer |
|---|---|---|
| DEN HAAG | 04-07-1990 | DAY G.J. |

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## x | MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

Siehe Blatt -B-

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-7 und 8 (teilweise)

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen,

nämlich:

1. Ansprüche 1-7 und 8 Teilweise: Verfahren zur
   Herstellung von Organozinnverbindungen und
   Verfahren zur Herstellung von Thermostabilisatoren
   für PVC-Harze bestehend aus der Synthese eines
   Organozinnzwischenproduktes gemäss mindestens einem
   der Ansprüche 1-7 gefolgt von der Umsetzung
   dieses Zwischenproduktes zum Thermostabilisator

2. Anspruch 8 Teilweise: Verfahren ausserhalb des Umfanges
   des ersten Gegenstandes zur Herstellung von
   Thermostabilisatoren für PVC-Harze bestehend aus der
   Umwandlung einer der Formel des ersten Anspruches
   entsprechenden Organozinnverbindung in einen
   Thermostabilisator.